# EUROPÄISCHE PATENTANMELDUNG

(11) **EP 0 532 895 A2**
(43) Veröffentlichungstag der Anmeldung: **24.03.1993**
(21) Anmeldenummer: 92113552.1
(22) Anmeldetag: 08.08.1992
(51) Int. Cl.: F16B 39/38

(54) **Mutter**

(30) Priorität: 17.08.1991 DE 4127272
(71) Anmelder: DRÖSSERT MASCHINENBAU GmbH, D-40882 Ratingen (DE)
(72) Erfinder: Schmidt, Dieter, W-4000 Düsseldorf (DE)
(74) Vertreter: COHAUSZ HASE DAWIDOWICZ & PARTNER

(57) **Zusammenfassung**

Die Erfindung betrifft eine Mutter mit einer Anflachungen aufweisenden Außenfläche und einer ein Innengewinde aufweisenden Bohrung, die die beiden Mutternstirnseiten miteinander verbindet, wobei sie einen schraubenförmigen Spalt oder Schnitt aufweist,
- dessen Schraubenachse koaxial mit der Mutternachse ist,
- der in einer Stirnseite beginnt und in der gegenüberliegenden Stirnseite endet, und
- der die Außenfläche und die Bohrungswandung über seine gesamte Länge durchtrennt.

## Beschreibung

Die Erfindung betrifft eine Mutter mit einer Anflachungen aufweisenden Außenfläche und einer ein Innengewinde aufweisenden Bohrung, die die beiden Mutternstirnseiten miteinander verbindet, wobei sie einen schraubenförmigen Spalt oder Schnitt aufweist, dessen Schraubenachse koaxial mit der Mutternachse ist.

Es ist bekannt, Muttern mit zusätzlichen Teilen, insbesondere geschlitzten Federringen zu versehen, um sie gegen ein Lösen zu sichern. Diese zusätzlichen Teile erhöhen den Fertigungs- und Montageaufwand. Ferner ist es aus den französischen Patentschriften FR 1309 776 und FR 1422 324 bekannt, Muttern mit Querschlitzen zu versehen. Diese bekannten Konstruktionen sind in Herstellung, Konstruktion und Handhabung kompliziert und aufwendig.

Zusätzlich haben solche Muttern den Vorteil, daß sie spielfrei gegenüber der Schraube sind. Z.B. interessant bei Trapezgewinde-Muttern, die bei Verstellgewinden, z.B. Werkzeugmaschinen, kein Spieln zur Trapezspindel haben.

Aufgabe der Erfindung ist es, eine Mutter der eingangs genannten Art so zu verbessern, daß sie selbsthemmend und anpassungsfähig an verschiedene Gewinde einer Schraube und einer Gewindestange ist und hierbei eine einfache Konstruktion aufweist.

Diese Aufgabe wird erfindungsgemäß dadurch gelöst, daß der schraubenförmige Spalt in einer Stirnachse beginnt und in der gegenüberliegenden Stirnseite endet und daß der schraubenförmige Spalt die Außenfläche und die Bohrungswandung über seine gesamte Länge durchtrennt.

Eine solche Mutter übt einen federnden Druck auf das Schrauben- oder Stangengewinde aus, so daß sie nach dem Festziehen sich nicht mehr löst. Hierbei ist die Mutter in Konstruktion, Herstellung und Anwendung einfach.

Vorzugsweise wird vorgeschlagen, daß der Spalt oder Schnitt 1/2 bis mehrfach umläuft. Ferner wird vorgeschlagen, daß der Spalt oder Schnitt zwischen sich eine Wendel bildet, an deren Innenseite das Gewindeprofil angeformt ist, das mit der Wendel parallel umläuft. Hierdurch bildet die Innenkante der Wendel die Windung der Mutter, so daß die Mutter sich an verschiedene Gewinde und Gewindesteigungen anpassen kann.

Zur weiteren Unterstützung der Selbsthemmung der Mutter kann die Gewinde-Profil-Reihe von einer Stirnseite zur anderen Stirnseite geradlinig mehrfach getrennt/zerschnitten werden. Dadurch kommen einerseits noch mehr einzelne Punkte zum Ausdruck gegen das Gewindeprofil der Schraube und andererseits verstärkt sich dadurch noch der federnde Druck.

Eine besonders einfach herzustellenden alternative Lösung ist gegeben, wenn die Mutter mindestens einen Spalt oder Schnitt aufweist, der quer zur Schraubenachse angeordnet ist und die Mutter mindestens 2/3 ihrer Breite durchtrennt. Hierbei kann sie aus zwei oder mehr plattenförmigen Schichten zusammengesetzt sein, wobei jede Schicht über einen seitlichen Randbereich mit dem Randbereich der benachbarten Schicht verbunden ist.

Besonders vorteilhaft ist es, wenn die Schichten abwechselnd an gegenüberliegenden Randbereichen miteinander verbunden sind und die Schichten liporelloförmig aufeinander gefaltet sind. Hierbei können zwei Reihen von Schichten abwechselnd ineinander gefaltet sein.

Um ausreichend Platz für den Knick bzw. die Faltung zu haben, muß das Teil, über das gefaltet wird, im Knickbereich verkürzt sein (Abschnit vom regelmäßigen Sechseck).

Eine Verstellung der Klemmkraft wird möglich, wenn im Rand der Mutter eine durch mindestens zwei Schichten verlaufende Bohrung angeordnet ist, die seitlich neben der Hauptbohrung achsparallel verläuft und in der eine Schraube einliegt, um die Größe des Spaltes zwischen zwei Schichten zu verändern.

Ausführungsbeispiele der Erfindung sind in den Zeichnungen dargestellt und werden im folgenden näher beschrieben. Es zeigen:
- Figur 1: eine perspektivische Darstellung eines ersten Ausführungsbeispiels,
- Figur 2: eine Seitenansicht eines zweiten Ausführungsbeispiels,
- Figur 3: einen axialen Schnitt durch das zweite Ausführungsbeispiel,
- Figur 4: eine Ansicht von oben auf das erste und zweite Ausführungsbeispiel,
- Figur 5: Seitenansichten von aus einem Band gefalteten Muttern verschiedener Größe,
- Figur 6: eine Seitenansicht eines Mutternbandes während der Faltung,
- Figur 7: eine Draufsicht auf ein Mutternband vor der Faltung,
- Figur 8: eine Draufsicht auf zwei Mutternbänder vor der Faltung,
- Figur 9: eine Seitenansicht von zwei Mutternbänder nach der Faltung,
- Figur 10: einen Schnitt durch eine gefaltete Mutter mit Klemmschraube.

Die Mutter 1 weist in üblicher Weise eine Außenfläche 2 mit sechs Anflachungen 2a und sechs Kanten 2b auf. Die Anflachungen erstrecken sich von einer oberen Stirnseite 3a bis zu einer unteren Stirnseite 3b, die zueinander parallel sind. Die Mutter 1 ist von einer Bohrung 4 durchsetzt, die ein Innengewinde 5 besitzt und in beiden Stirnseiten 3a, 3b mündet.

Die Mutter 1 weist einen schraubenförmigen Schnitt oder Spalt 6 auf, der an einer Stirnseite 3a beginnt und in der gegenüberliegenden Stirnseite 3b mündet. Die Schraubenachse des Spaltes 6 ist koaxial mit der Mutternachse und der Spalt 6 durchtrennt sowohl die Außenfläche 2 als auch die Innenseite der Bohrung 4, so daß der Spalt 6 über die gesamte Breite B der Mutternwand verläuft.

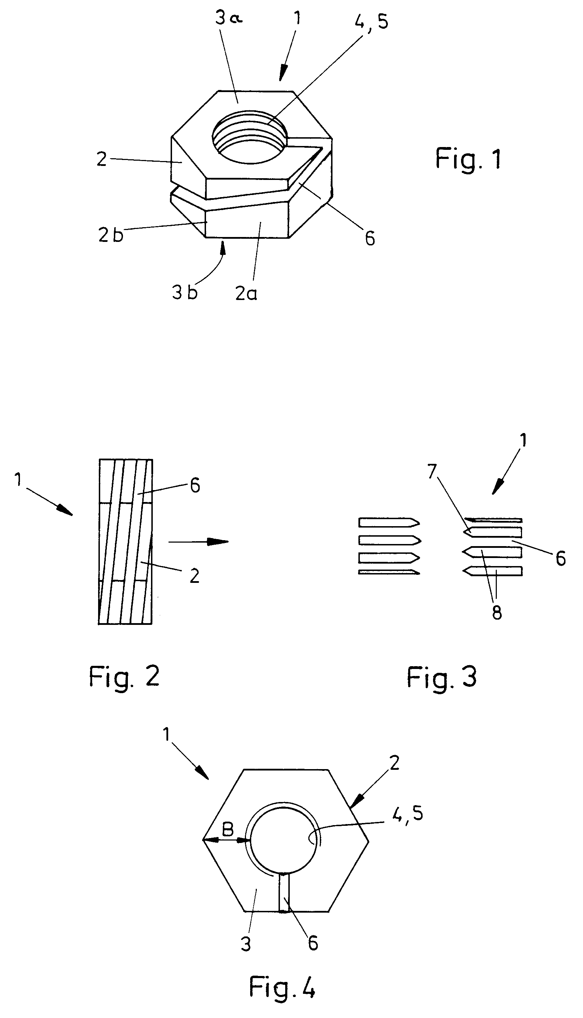

Diese Seitenwände des Spaltes 6 können im nichtbelasteten Zustand eng aufeinander liegen, oder aber einen Abstand bilden. Damit bildet die Mutter 1 eine Schraubendruck- oder Schraubenzugfeder entsprechend dem jeweiligen Anwendungsfall. Der Schnitt oder Spalt 6 kann entsprechend dem Ausführungsbeispiel nach Figur 1 weniger als 360 Grad umlaufen.

Im Ausführungsbeispiel nach Figuren 2 und 3 läuft der Schnitt bzw. Spalt 6 mehrfach um, so daß das Mutternmaterial zwischen dem Schnitt oder Spalt eine Wendel bildet, an deren die Bohrung bildende Innenseite das Gewindeprofil angeformt ist. Damit läuft das Profil 7 an der Innenseite entlang der Wendel 8, so daß die Steigung des Gewindes veränderbar ist.

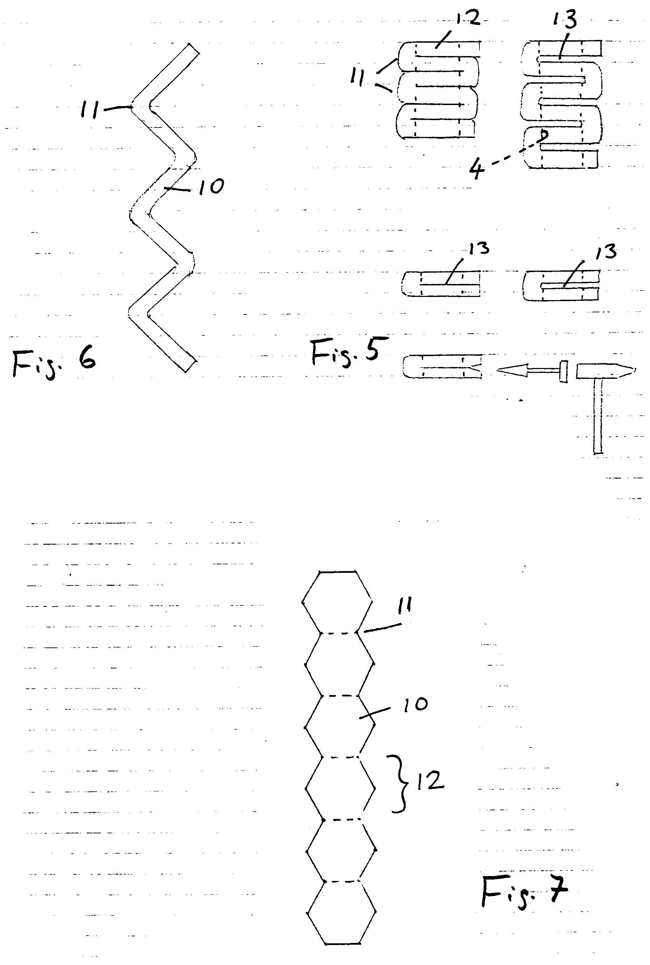

Weitere alternative Ausführungen zeigen die Figuren 5 bis 10, bei denen die Muttern aus einem Metallband 10 liporelloförmig gefaltet sind. Das Band 10 wird zuerst an den Knickstellen 11 abwechselnd zu beiden Seiten abgebogen, wie dies Figur 6 zeigt und danach wird das Band gefaltet, wie in Figur 5 dargestellt. Die zwischen den Knickstellen 11 befindlichen Bereich bilden nach dem Falten Schichten 12 gleicher Dicke der Mutter. Diese Platten oder Schichten 12 können bereits vor dem Knicken jeweils die sechseckige Form des Querschnitts der Mutter besitzen, wie dies Figur 7 zeigt. Alternativ kann aber auch das Herstellen der Sechseckform nach dem Falten durc Formen, Pressen oder Fräsen erfolgen.

Die zwischen den Schichten 12 befindlichen Spalten können auch Schnitte sein, die in das volle Material eingebracht werden, so daß ein Falten sich erübrigt. Die Spalte können eine Höhe von 0 mm bis mehrere Millimeter besitzen. Die Gewindebohrung 4 wird vor dem Falten bzw. Schneiden oder danach eingebracht.

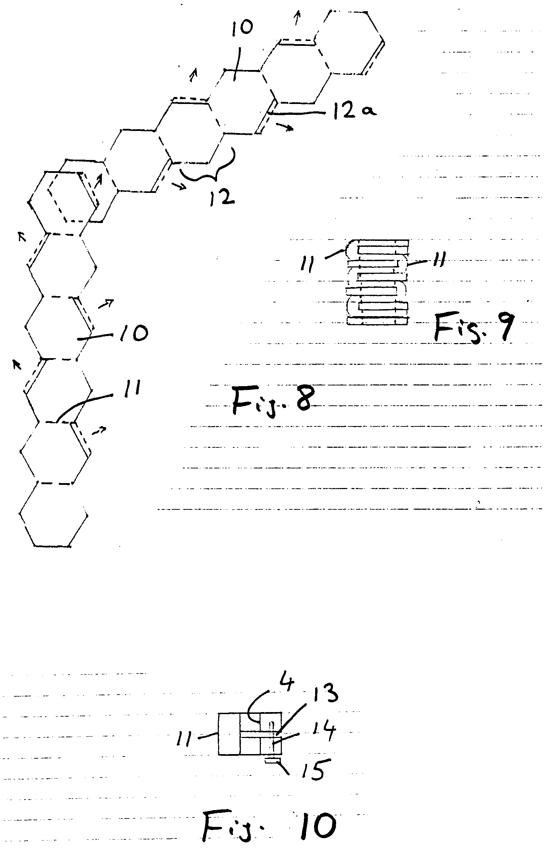

Bei den in den Figuren 8 und 9 dargestellten Ausführungsbeispiel werden zwei Bänder 10 verwendet, die abwechselnd gefaltet sind, so daß die Schichten abwechselnd von einer Platte des einen Bandes und des anderen Bandes 10 gebildet sind. Der fertig gefaltete Zustand ist in Figur 9 dargestellt. An jeder Schicht 12 fehlt ein Abschnitt 12a, um Platz zu schaffen für das Material des anderen hineingefalteten Bandes.

Die in den Figuren 5 bis 9 dargestellten Muttern können endlos hergestellt werden, weil dann je nach gewünschter Mutternhöhe diese geschnitten bzw. abgestochen werden.

Wie in Figur 10 gezeigt, kann im seitlichen Rand der Mutter eine Gewindebohrung 14 eingebracht sein, die neben der Hauptbohrung 4 achsparallel angeordnet ist und eine Schraube 15 aufnimmt, um die Größe des Spaltes 13 und damit die Klemmkraft verändern zu können.

## Patentansprüche

1. Mutter (1) mit einer Anflachungen (2a) aufweisenden Außenfläche (2) und einer ein Innengewinde (5) aufweisenden Bohrung (4), die die beiden Mutternstirnseiten (3a,3b) miteinander verbindet, wobei sie einen schraubenförmigen Spalt (6) oder Schnitt aufweist, dessen Schraubenachse koaxial mit der Mutternachse ist, **dadurch gekennzeichnet,** daß der schraubenförmige Spalt (6) in einer Stirnseite (3a) beginnt und in der gegenüberliegenden Stirnseite (3b) endet, und daß der der schraubenförmige Spalt (6) die Außenfläche (2) und die die Bohrungswandung über seine gesamte Länge durchtrennt.

2. Mutter nach Anspruch 1, **dadurch gekennzeichnet,** daß der Spalt oder Schnitt 1/2 bis mehrfach umläuft.

3. Mutter nach Anspruch 1 oder 2, **dadurch gekennzeichnet,** daß der Spalt (6) oder Schnitt zwischen sich eine Wendel (8) bildet, an deren Innenseite das Gewindeprofil (7) angeformt ist, das mit der Wendel (8) parallel umläuft.

4. Mutter (1) mit einer Anflachungen (2a) aufweisenden Außenfläche (2) und einer ein Innengewinde (5) aufweisenden Bohrung (4), die die beiden Mutternstirnseiten (3a,3b) miteinander verbindet, **dadurch gekennzeichnet,** daß die Mutter mindestens einen Spalt oder Schnitt aufweist, der quer zur Schraubenachse angeordnet ist und die Mutter mindestens zu 2/3 ihrer Breite durchtrennt.

5. Mutter nach Anpruch 4, **dadurch gekennzeichnet,** daß sie aus zwei oder mehr plattenförmigen Schichten (12) zusammengesetzt ist, wobei jede Schicht (12) über einen seitlichen Randbereich (11) mit dem Randbereich der benachbarten Schicht verbunden ist.

6. Mutter nach Anspruch 5, **dadurch gekennzeichnet,** daß die Schichten (12) abwechselnd an gegenüberliegenden Randbereichen (11) miteinander verbunden sind.

7. Mutter nach Anspruch 5 oder 6, **dadurch gekennzeichnet,** daß die Schichten (12) liporelloförmig aufeinander gefaltet sind.

8. Mutter nach einem der Anprüche 4 bis 7, **dadurch gekennzeichnet,** daß zwei Reihen (10) von Schichten (12) abwechselnd ineinander gefaltet sind.

9. Mutter nach einem der vorherigen Ansprüche, **dadurch gekennzeichnet,** daß im Rand der Mutter (1) eine durch mindestens zwei Schichten (12) verlaufende Bohrung (14) angeordnet ist, die seitlich neben der Hauptbohrung (4) achsparallel verläuft und in der eine Schraube (15) einliegt, um die Größe des Spaltes (13) zwischen zwei Schichten zu verändern.
